# EUROPÄISCHE PATENTSCHRIFT

(11) **EP 3 911 609 B1**
(45) Veröffentlichungstag und Bekanntmachung des Hinweises auf die Patenterteilung: **05.06.2024**
(21) Anmeldenummer: 20704246.6
(22) Anmeldetag: 05.02.2020
(51) Int. Cl.: C02F 3/28, C02F 1/24, C02F 1/66, C02F 3/34, C02F 103/28

(54) **VERFAHREN ZUR REINIGUNG VON IN EINER ANLAGE ZUR ALTPAPIERAUFBEREITUNG IM KREISLAUF GEFÜHRTEN PROZESSWASSER MIT ENZYMEN**
METHOD FOR CLEANING PROCESS WATER CIRCULATED IN A PAPER RECYCLING SYSTEM USING ENZYMES
PROCÉDÉ DE PURIFICATION, À L'AIDE D'ENZYMES, D'EAU DE PROCESSUS CIRCULANT DANS UNE USINE DE TRAITEMENT DES DÉCHETS DE PAPIER

(30) Priorität: 15.02.2019 DE 102019001127
(43) Veröffentlichungstag der Anmeldung: 24.11.2021
(73) Patentinhaber: MERI Environmental Solutions GmbH, 81243 München (DE)
(72) Erfinder: DOMENE FIGUEROLA, Luis, 81673 München (DE); LAUBROCK, Henning, 81673 München (DE); TROUBOUNIS, George, 80331 München (DE)
(74) Vertreter: Henkel & Partner mbB
(86) Internationale Anmeldenummer: PCT/EP2020/052911
(87) Internationale Veröffentlichungsnummer: WO 2020/165007

(56) Entgegenhaltungen:
- EP-A1- 0 134 766
- WO-A1-88/04282
- WO-A1-2016/139377
- DE-A1-102008 028 003
- DE-C1- 4 141 832

## Beschreibung

Die vorliegende Erfindung betrifft ein Verfahren zur Reinigung von in einer Anlage zur Altpapieraufbereitung im Kreislauf geführten Prozesswasser, insbesondere zur kontinuierlichen Reinigung von Prozesswasser bei der Herstellung von Papier aus Altpapier, bei dem wenigstens ein Teil des zu reinigenden Prozesswassers in einem Vorversäuerungsschritt einer Hydrolyse und einer Versäuerung unterworfen wird und das so behandelte Prozesswasser anschließend in einem anaeroben Reinigungsschritt mit anaeroben Mikroorganismen kontaktiert wird, um in demZZ Prozesswasser enthaltenen Verunreinigungen abzubauen.

Eine Aufbereitung von Prozesswasser ist auf vielen technischen Gebieten insbesondere in den Fällen notwendig, in denen das Prozesswasser in der entsprechenden Anlage im Kreislauf geführt wird, um eine Anreicherung des Prozesswassers mit Störstoffen zu verhindern. Dies gilt insbesondere auch für das Prozesswasser bei der Papierherstellung, und zwar sowohl bei der Papierherstellung aus Frischfasern als auch insbesondere bei der Papierherstellung aus Altpapier. In den letzten Jahrzehnten wird Papier zunehmend aus Altpapier gewonnen, um den Energieverbrauch bei der Papierherstellung zu senken, und insbesondere, um den Verbrauch an natürlichen Ressourcen zu vermindern. Bei der Papierherstellung aus Altpapier wird das Altpapier zunächst mit Wasser vermengt und in einem Pulper bzw. Stoffauflöser unter Rühren und Mischen zerkleinert, um die einzelnen Faserverbunde aufzulösen. Anschließend erfolgt eine Reinigung der Fasern, um nichtfasrige Fremdkörper aus dem Faserbrei zu entfernen, bevor die Fasern optional entfärbt werden und schließlich ggf. nach Zusatz eines geringen Anteils an Primärfasern auf einer Papiermaschine zu Papier verarbeitet werden. Eine entsprechende Anlage umfasst mithin eine Vorrichtung zur Aufbereitung von Altpapier und eine Papiermaschine, wobei die Altpapieraufbereitungsvorrichtung eine Altpapierauflöseeinheit bzw. einen Pulper, in der dem Altpapier Prozesswasser zum Auflösen und Zerkleinern der Fasern zugeführt wird, eine Sortiervorrichtung zur Entfernung von Verschmutzungen und eine Entwässerungseinheit zur Entfernung von Prozesswasser aufweist. Um das Prozesswasser im Kreislauf führen zu können und so den Frischwasserzusatz minimieren zu können, muss das Prozesswasser in einem erforderlichen Ausmaß gereinigt werden. Hierzu wird in den Prozesswasseraufbereitungseinheiten üblicherweise ein Prozesswasseraufbereitungsverfahren eingesetzt.

Zur Prozesswasserreinigung sind eine Vielzahl von mechanischen, chemischen sowie biologischen Verfahren und entsprechende Reaktoren bekannt. Bei der biologischen Prozesswasserreinigung wird das zu reinigende Prozesswasser mit aeroben oder anaeroben Mikroorganismen kontaktiert, welche die in dem Prozesswasser enthaltenen organischen Verunreinigungen im Falle von aeroben Mikroorganismen überwiegend zu Kohlendioxid und Wasser und im Falle von anaeroben Mikroorganismen vorwiegend zu Kohlendioxid und Methan abbauen. Dabei werden die biologischen Prozesswasserreinigungsverfahren in jüngster Zeit zunehmend mit anaeroben Mikroorganismen durchgeführt, weil bei der anaeroben Prozesswasserreinigung zum einen nicht unter hohem Energieaufwand Sauerstoff in den Bioreaktor eingeführt werden muss und zum anderen bei der Reinigung energiereiches Biogas erzeugt wird, welches nachfolgend zur Energiegewinnung eingesetzt werden kann. Je nach der Art und Form der eingesetzten Biomasse werden die Reaktoren für die anaerobe Prozesswasserreinigung in Kontaktschlammreaktoren, UASB-Reaktoren, EGSB-Reaktoren, Festbettreaktoren und Fließbettreaktoren unterteilt. Während die Mikroorganismen bei Festbettreaktoren an ortsfesten Trägermaterialen und die Mikroorganismen bei Fließbettreaktoren auf frei beweglichen, kleinem Trägermaterial anhaften, werden die Mikroorganismen bei den UASB- und EGSB-Reaktoren in Form so genannter Pellets eingesetzt. Derartige Verfahren und entsprechende Reaktoren sind beispielsweise in der EP 0 170 332 A1, in der EP 1 071 636 B1 und in der EP 0 539 430 B1 beschrieben.

Es ist auch bekannt, das zu reinigende Prozesswasser vor der Zuführung in einen anaeroben Reaktor einem Vorversäuerungsreaktor zuzuführen, in dem eine Hydrolyse und Azidifikation (bzw. Versäuerung) durch hydrolysierende und versäuernde Bakterien stattfindet. Während bei der Hydrolyse Polymere, wie beispielsweise Polysaccharide, Polypeptide und Fette, zu deren Monomeren, wie Zucker, Aminosäuren und Fettsäuren, abgebaut werden, werden diese Monomere bei der Azidifikation in organischer Säuren, Alkohole, Aldehyde, Wasserstoff und Kohlendioxid umgewandelt. Mithin findet in dem Vorversäuerungsreaktor schon eine erste Vorreinigung statt. Zudem können in dem Vorversäuerungsreaktor durch Zugabe geeigneter Nährstoffe und Spurenelemente die für die in dem nachfolgenden anaeroben Reaktor eingesetzten anaeroben Mikroorganismen geeigneten Wachstumsbedingungen eingestellt werden. Beispielsweise weist das in der Papierindustrie anfallende Prozesswasser regelmäßig nur sehr wenig Stickstoff- und Phosphorverbindungen auf, so dass diese dem Prozesswasser vor dessen Zuführung in den anaeroben Reaktor zugefügt werden müssen, um ein optimales Wachstum der Mikroorganismen in dem anaeroben Reaktor zu gewährleisten. Gleichermaßen können in dem Vorversäuerungsreaktor durch Zugabe entsprechender pH-Einstellmittel die für das Wachstum der Mikroorganismen in dem nachfolgenden anaeroben Reaktor geeigneten pH-Werte des zu reinigenden Prozesswassers eingestellt werden. In dem anaeroben Reaktor finden dann eine Acetogenese statt, bei welcher die bei der Azidifikation erzeugten organischen Säuren vornehmlich zu Essigsäure umgesetzt werden, bevor bei der anschließenden Methanogenese die Essigsäure zu Methan und Kohlendioxid umgesetzt wird.

Insbesondere bei der Papierherstellung aus Altpapier wird dem Prozesswasser Biozid zugesetzt. Dies ist deshalb notwendig, weil Altpapier auf seiner Oberfläche Stärke aufweist, welche bei der Papierherstellung auf das Papier aufgetragen wurde, um die Festigkeit und Glätte des Papiers zu verbessern. Daher löst sich während der Altpapieraufbereitung Stärke in dem Prozesswasser. Allerdings ist Stärke ein guter Nährstoff für Mikroorganismen, weswegen sich in dem Prozesswasser bei der Altpapieraufbereitung ohne Zugabe von Biozid zu dem Prozesswasser Mikroorganismen unkontrolliert vermehren würden. Aufgrund der Vermehrung der Mikroorganismen würde sich zudem der pH-Wert des Prozesswassers verringern, was zur Folge hätte, dass auf der Altpapieroberfläche befindlicher Kalk, der bei der Papierherstellung als Füllstoff eingesetzt worden ist, vermehrt in Lösung gehen würde, was den Papierherstellungsprozess durch unerwünschte unkontrollierte Ablagerungen stören und bei den Prozesswasserreinigungsschritten, wie insbesondere dem anaeroben Reinigungsschritt, Probleme mit sich bringen würde, da u.a. der Kalk auf den Mikroorganismenpellets präzipitieren und so die Mikroorganismen umkapseln könnte. Aus diesem Grund wird dem Prozesswasser Biozid zugesetzt. Allerdings stört bzw. behindert das in dem Prozesswasser enthaltene Biozid die Vorversäuerung, vermutlich, weil es die Hydrolyse hemmt. Versuche der Erfinder haben gezeigt, dass für das mit Biozid versetzte Prozesswasser einer Maschine zur Herstellung von Papier aus Altpapier selbst nach Zusatz von Nährstoffen für die Vorversäuerungsbakterien, wie Harnstoff und Phosphorsäure als Stickstoff- und Phosphorquellen, keine nennenswerte Hydrolyse und Versäuerung stattfindet.

Aus der DE 10 2008 028 003 A1 ist ein Verfahren zur Reinigung von im Kreislauf geführten Prozesswasser einer Altpapieraufbereitungsanlage bekannt, welches eine anaerobe Reinigungsstufe umfasst und zudem einen Vorversäuerungsschritt umfassen kann.

In der DE 41 41 832 C1 wird ein Verfahren zum Betrieb einer einer Kläranlage nachgeschalteten Anlage für die Weiterverarbeitung von vorentwässertem Klärschlamm, der aus einer Mischung von Belebtschlamm aus der Kläranlage und Primärschlamm besteht, beschrieben, wobei die Anlage für die Weiterverarbeitung des Klärschlammes einen anaerob betriebenen Versäuerungsreaktor sowie einen nachgeschalteten anaerob betriebenen Biogasreaktor aufweist. Es handelt sich um einen so genannten Digester, der Feststoffe/Schlämme anaerob metabolisiert und nicht Prozesswasser behandelt.

Aus der WO 88/04282 A1) ist ein Verfahren zum Umwandeln von bioabbaubarem Schlamm zu einem gasförmigen Treibstoff bekannt, welches die folgenden Schritte umfasst: a) Hydrolysieren des Schlamms mit hydrolytischen Enzymen, wobei dem Schlamm hydrolytische Enzyme zugesetzt werden, b) weiteres Hydrolysieren des Schlamms durch alkalische Hydrolyse, c) Entfernen der nicht solubilisierten Feststoffe aus dem hydrolysierten Produkt, d) Neutralisieren des Produkts und e) anaerobes Verdauen des neutralisierten Produkts in gasförmigen Treibstoff.

Aufgabe der vorliegenden Erfindung ist daher die Bereitstellung eines einfachen und kostengünstigen Verfahrens zur Reinigung von in einer Anlage zur Altpapieraufbereitung im Kreislauf geführten Prozesswasser, bei welchem auch trotz in dem Prozesswasser enthaltenem Biozid und insbesondere auch ohne komplexe Steuerung der Biozidkonzentration die Vorversäuerung und nachfolgende anaerobe Reinigung wirksam und zuverlässig verlaufen.

Erfindungsgemäß wird diese Aufgabe gelöst durch ein Verfahren gemäß Patentanspruch 1 und insbesondere durch ein Verfahren zur vorzugsweise kontinuierlichen Reinigung von in einer Anlage zur Altpapieraufbereitung (wie insbesondere einer Anlage zur Herstellung von Papier aus Altpapier) im Kreislauf geführten Prozesswasser umfassend einen Prozesswasseraufbereitungsschritt, welcher als Teilschritte wenigstens einen Vorversäuerungsschritt sowie wenigstens einen anaeroben Reinigungsschritt umfasst, wobei wenigstens ein Teil des zu reinigenden Prozesswassers in dem wenigstens einen Vorversäuerungsschritt einer Hydrolyse und einer Versäuerung unterworfen wird und das so behandelte Prozesswasser anschließend in dem wenigstens einen anaeroben Reinigungsschritt mit anaeroben Mikroorganismen kontaktiert wird, um in dem Prozesswasser enthaltenen Verunreinigungen abzubauen, wobei dem Prozesswasser vor oder während des wenigstens einen Vorversäuerungsschrittes wenigstens ein Saccharid spaltendes Enzym zugegeben wird und der pH-Wert des Prozesswassers zumindest während des wenigstens einen Vorversäuerungsschrittes und des wenigstens einen anaeroben Reinigungsschrittes auf 8,0 oder kleiner eingestellt wird, wobei während der gesamten Prozesswasseraufbereitung weder eine alkalische Hydrolyse noch eine chemische Hydrolyse durchgeführt wird. Bevorzugt wird der pH-Wert des Prozesswassers zumindest vom Beginn des wenigstens einen Vorversäuerungsschrittes bis zum Abschluss des wenigstens einen anaeroben Reinigungsschrittes auf 8,0 oder kleiner eingestellt, also auch während etwaigen weiteren Teilschritt(en), welche zwischen dem wenigstens einen Vorversäuerungsschritt und dem wenigstens einen anaeroben Reinigungsschritt durchgeführt werden.

Diese Lösung basiert auf der überraschenden Erkenntnis, dass durch die Anwesenheit von ein oder mehreren Saccharid spaltenden Enzymen während dem Vorversäuerungsschritt eine Beeinträchtigung der Hydrolyse und nachfolgenden Versäuerung in dem Vorversäuerungsschritt durch das in dem Prozesswasser enthaltene Biozid kompensiert wird und daher trotz der Anwesenheit des Biozids eine wirksame und zuverlässige Hydrolyse und Versäuerung stattfindet. Dadurch wird eine wirksame und zuverlässige Vorversäuerung selbst ohne komplexe Steuerung der Biozidkonzentration in dem Prozesswasser erreicht. Daher ist dieses Verfahren insbesondere auch zur Reinigung von Prozesswasser geeignet, welches lange Zeit ohne Zugabe größerer Mengen an Frischwasser im Kreislauf geführt wird. Aus diesem Grund eignet sich das erfindungsgemäße Verfahren hervorragend zur Reinigung von Prozesswasser bei der Papierherstellung aus Altpapier.

Unter einem Saccharid spaltendem Enzym wird ein Enzym verstanden, welches das Saccharid in zwei oder mehr Fragmente spaltet bzw. zerlegt, insbesondere indem eine oder mehrere kovalente Bindungen des Saccharids getrennt werden. Ein Saccharid spaltendes Enzym kann daher auch als Saccharid abbauendes Enzym oder Saccharid zerlegendes Enzym bezeichnet werden.

Erfindungsgemäß umfasst das Verfahren zur Reinigung von in einer Anlage zur Altpapieraufbereitung (bevorzugt Anlage zur Herstellung von Papier aus Altpapier) im Kreislauf geführten Prozesswasser einen Prozesswasseraufbereitungsschritt, welcher als Teilschritte wenigstens einen Vorversäuerungsschritt, bevorzugt genau einen Vorversäuerungsschritt, sowie wenigstens einen anaeroben Reinigungsschritt, bevorzugt genau einen anaeroben Reinigungsschritt, umfasst. Grundsätzlich ist die vorliegende Erfindung nicht bezüglich des Teils der Altpapieraufbereitungsanlage beschränkt, aus der das Prozesswasser dem Prozesswasseraufbereitungsschritt zugeführt wird. Vorzugsweise wird das Prozesswasser dem Prozesswasseraufbereitungsschritt aus wenigstens einer Einheit wenigstens einer Stufe der Anlage zur Altpapieraufbereitung bzw. Altpapieraufbereitungsvorrichtung zugeführt und nach dem Prozesswasseraufbereitungsschritt wieder wenigstens einer Einheit wenigstens einer Stufe der Altpapieraufbereitungsvorrichtung zugeführt, wobei die Einheit ausgewählt ist aus ein oder mehreren von Stofflöser, Sortiervorrichtung, Entwässerungseinheit und Oxidations-/Reduktionseinheit.

Dabei kann die Altpapieraufbereitungsvorrichtung eine oder mehrere Stufen aufweisen, wobei wenigstens eine dieser Stufen oder mehrere dieser Stufen oder alle dieser Stufen eine eigene Prozesswasseraufbereitungseinheit umfassen, in welcher jeweils ein Prozesswasseraufbereitungsschritt umfassend wenigstens einen Vorversäuerungsschritt sowie wenigstens einen anaeroben Reinigungsschritt durchgeführt wird. Beispielsweise umfasst die Altpapieraufbereitungsvorrichtung zwei Stufen, wobei die erste Stufe einen Stofflöser, eine Sortiervorrichtung sowie eine Entwässerungseinheit umfasst und die zweite Stufe eine Sortiervorrichtung, eine Oxidations-/Reduktionseinheit sowie eine Entwässerungseinheit umfasst. Jede der Stufen umfasst eine Prozesswasseraufbereitungseinheit. Dabei können von allen diese Einheiten Prozesswasser zu den in den Prozesswasseraufbereitungseinheiten durchgeführten Prozesswasseraufbereitungsschritten zugeführt werden, also von dem Stofflöser, der Sortiervorrichtung sowie der Entwässerungseinheit dem Prozesswasseraufbereitungsschritt für die erste Stufe und von der Sortiervorrichtung, der Oxidations-/Reduktionseinheit sowie der Entwässerungseinheit dem Prozesswasseraufbereitungsschritt für die zweite Stufe der Altpapieraufbereitungsvorrichtung. Allerdings ist es auch möglich, wenn auch weniger bevorzugt, dass den Prozesswasseraufbereitungsschritten Prozesswasser nur aus einzelnen Einheiten zugeführt wird, also beispielsweise dem Prozesswasseraufbereitungsschritt für die erste Stufe der Altpapieraufbereitungsvorrichtung Prozesswasser aus dem Stofflöser und dem Prozesswasseraufbereitungsschritt für die zweite Stufe der Altpapieraufbereitungsvorrichtung Prozesswasser aus der Entwässerungseinheit.

Erfindungsgemäß wird der pH-Wert des Prozesswassers zumindest während des wenigstens einen Vorversäuerungsschrittes und während des wenigstens einen anaeroben Reinigungsschrittes und bevorzugt zumindest vom Beginn des wenigstens einen Vorversäuerungsschrittes bis zum Abschluss des wenigstens einen anaeroben Reinigungsschrittes auf 8,0 oder kleiner eingestellt. Unter Einstellen des pH-Wertes ist dabei im Sinne der vorliegenden Erfindung zu verstehen, dass das Verfahrens so betrieben wird, dass das Prozesswasser einen solchen pH-Wert aufweist. Dies erfordert nicht notwendigerweise, dass dem Prozesswasser ein pH-Einstellmittel zugegeben werden muss, wenn sich durch die Verfahrensführung ein solcher pH-Wert auch ohne Zugabe eines pH-Einstellmittels ergibt.

Vorzugsweise wird der pH-Wert des Prozesswassers zumindest während des wenigstens einen Vorversäuerungsschrittes und während des wenigstens einen anaeroben Reinigungsschrittes und bevorzugt zumindest vom Beginn des Vorversäuerungsschrittes bis zum Abschluss des anaeroben Reinigungsschrittes auf 4,0 bis 8,0 und besonders bevorzugt auf 5,5 bis 7,5 eingestellt.

Um in dem wenigstens einen Vorversäuerungsschritt eine effiziente Hydrolyse und Versäuerung zu erreichen, wird es in Weiterbildung des Erfindungsgedankens vorgeschlagen, das Prozesswasser vor der Vorversäuerung durch Kühlung oder Erwärmen auf eine Temperatur im Bereich von 25 bis 40°C, bevorzugt von 30 bis 38°C, besonders bevorzugt von 36 bis 38°C und ganz besonders bevorzugt von etwa 37°C einzustellen.

Des Weiteren ist es bevorzugt, das Prozesswasser vor der Vorversäuerung auf einen pH-Wert im Bereich von 4,0 bis 7,0, besonders bevorzugt von 5,7 bis 7,0 und höchst bevorzugt von 5,7 bis 6,7 einzustellen. Wie vorstehend dargelegt, kann die Einstellung des pH-Wertes des Prozesswassers auf die vorgenannten Werte durch Zugabe von pH-Einstellmittel erfolgen, muss aber nicht.

In dem Prozesswasseraufbereitungsschritt wird nach dem wenigstens einen Vorversäuerungsschritt (bevorzugt genau einem Vorversäuerungsschritt) wenigstens ein anaerober Reinigungsschritt (bevorzugt genau ein anaerober Reinigungsschritt) durchgeführt. Vorzugsweise wird der erste des wenigstens einen anaeroben Reinigungsschrittes direkt im Anschluss an den letzten des wenigstens einen Vorversäuerungsschrittes durchgeführt, d.h. zwischen dem letzten des wenigstens einen Vorversäuerungsschrittes und dem ersten des wenigstens einen anaeroben Reinigungsschrittes wird kein anderer Reinigungsteilschritt durchgeführt.

Vorzugsweise wird das Prozesswasser vor und/oder während des anaeroben Reinigungsschrittes auf einen pH-Wert im Bereich von 4,0 bis 8,0, bevorzugt von 5,7 bis 7,5 und besonders bevorzugt von 6,4 bis 7,5 eingestellt. Wie vorstehend dargelegt, kann die Einstellung des pH-Wertes des Prozesswassers auf die vorgenannten Werte durch Zugabe von pH-Einstellmittel erfolgen, muss aber nicht.

Besonders gute Ergebnisse werden erzielt, wenn der pH-Wert des Prozesswassers während des gesamten Prozesswasseraufbereitungsschrittes auf 4,0 bis 8,5 eingestellt wird. D.h., während der pH-Wert des Prozesswassers zumindest vom Beginn des wenigstens einen Vorversäuerungsschrittes bis zum Abschluss des wenigstens einen anaeroben Reinigungsschrittes 8,0 oder kleiner beträgt, beträgt der pH-Wert in den etwaigen anderen Teilschritten des Prozesswasseraufbereitungsschrittes, wie des weiter unten beschriebenen Entkalkungsschrittes, 4,0 bis 8,5.

Erfindungsgemäß wird während der gesamten Prozesswasseraufbereitung, also während des gesamten Prozesswasseraufbereitungsschrittes, weder eine alkalische Hydrolyse (also keine Hydrolyse bei einem pH-Wert von mindestens 9,0 oder gar mindestens 10,0) noch eine chemische Hydrolyse durchgeführt.

Vorzugsweise enthält das Prozesswasser ein oder mehrere Biozide, und zwar bevorzugt kleiner 1,0 bis 8,0 und bevorzugt 1,0 bis 4,0 kg pro Tonne produziertes Papier Biozid.

Gute Ergebnisse werden insbesondere erhalten, wenn das Prozesswasser als Biozid Glutaraldehyd, 2-Bromo-2-nitropropan-1.3-diol (bekannt als Bronopol), eine Isothiazolinonverbindung, eine quartäre Ammoniumverbindung, eine Bromverbindung, eine Chlorverbindungen und/oder eine Peroxyverbindung, wie beispielsweise Ammoniumbromid und/oder stabilisierte Peroxyessigsäure enthält.

Gemäß einer besonders bevorzugten Ausführungsform der vorliegenden Erfindung ist es vorgesehen, dass dem zu behandelnden Prozesswasser vor oder während des Vorversäuerungsschrittes wenigstens ein Polysaccharid spaltendes Enzym zugegeben wird.

Vorzugsweise wird dem zu behandelndem Prozesswasser vor oder während des Vorversäuerungsschrittes wenigstens ein Polysaccharid spaltendes Enzym zugegeben, welches aus der Gruppe ausgewählt wird, welche aus Amylasen, Cellulasen, Glucoamylasen, Xylanasen, alpha-Galactosidasen und beliebigen Kombination von zwei oder mehr der vorgenannten Enzyme besteht.

Gute Ergebnisse werden beispielsweise erhalten, wenn dem zu behandelndem Prozesswasser vor oder während des Vorversäuerungsschrittes eine Cellulase und Amylase enthaltende Mischung, wie bspw. eine Mischung aus Cellulase, Amylase, Glucoamylase, Xylanase und alpha-Galactosidase, zugegeben wird. Dadurch werden die in dem zu behandelnden Prozesswasser enthaltenden Polysaccharide und insbesondere die sich bei der Altpapierherstellung in dem Prozesswasser ansammelnde Cellulose und Stärke zuverlässig gespalten.

Die Menge jedes der zugesetzten Polysaccharid spaltenden Enzyme beträgt vorzugsweise 1 bis 100.000 Einheiten pro Liter des zu behandelndem Prozesswassers, wobei eine Einheit Enzym die Menge Enzym ist, welche pro Minute unter den vorliegenden Bedingungen 1 µmol Substrat umsetzt.

Zusätzlich zu wenigstens einem Polysaccharid spaltenden Enzym oder auch anstelle wenigstens eines Polysaccharid spaltenden Enzyms können dem zu behandelndem Prozesswasser vor oder während des Vorversäuerungsschrittes ein oder mehrere Oligosaccharid spaltende Enzyme zugegeben werden. Unter Oligosaccharid werden dabei im Rahmen der vorliegenden Erfindung Saccharide verstanden, welche zwei bis zehn miteinander verbundene Saccharidreste umfassen, wohingegen unter Polysaccharid Saccharide verstanden werden, welche mehr als zehn miteinander verbundene Saccharidreste umfassen.

Gute Ergebnisse werden bei dieser Ausführungsform insbesondere erhalten, wenn dem zu behandelndem Prozesswasser vor oder während des Vorversäuerungsschrittes wenigstens ein Oligosaccharid spaltendes Enzym zugegeben wird, welches aus der Gruppe ausgewählt wird, welche aus Lactasen, Maltasen, Invertasen und Kombination hiervon besteht.

Die Menge jedes der zugesetzten Oligosaccharid spaltenden Enzyme beträgt vorzugsweise 1 bis 10.000 und besonders bevorzugt 1 bis 1.000 Einheiten.

Beispielsweise kann dem zu behandelndem Prozesswasser vor oder während des Vorversäuerungsschrittes eine Mischung zugegeben werden, welche Lactase, Maltase sowie Invertase enthält.

Gemäß einer alternativen, besonders bevorzugten Ausführungsform kann dem zu behandelndem Prozesswasser vor oder während des Vorversäuerungsschrittes eine Mischung zugegeben werden, welche Cellulase, Amylase, Lactase und Maltase, enthält, wie bspw. eine Mischung aus Cellulase, Amylase, Glucoamylase, Xylanase, alpha-Galactosidase, Lactase, Maltase und Invertase.

In Weiterbildung des Erfindungsgedankens wird es vorgeschlagen, dass dem zu behandelndem Prozesswasser vor oder während des Vorversäuerungsschrittes zusätzlich zu dem wenigstens einem Saccharid spaltendem Enzym wenigstens eine Lipase zugegeben wird.

Vorzugsweise beträgt die Menge an zugesetzter Lipase 1 bis 100.000 und besonders bevorzugt 10 bis 10.000 Einheiten.

Des Weiteren hat es sich als vorteilhaft erwiesen, dem zu behandelndem Prozesswasser vor oder während des Vorversäuerungsschrittes zusätzlich zu dem wenigstens einem Saccharid spaltendem Enzym wenigstens eine Protease zuzugeben.

Vorzugsweise beträgt die Menge an zugesetzter Protease 1 bis 1.000.000 und besonders bevorzugt 100 bis 100.000 Einheiten.

Gemäß einer besonders bevorzugten Ausführungsform der vorliegenden Erfindung ist es vorgesehen, dem zu behandelndem Prozesswasser vor oder während des Vorversäuerungsschrittes wenigstens ein Polysaccharid spaltendes Enzym und wenigstens eine Lipase zuzugeben.

Besonders gute Ergebnisse werden erhalten, wenn dem zu behandelndem Prozesswasser vor oder während des Vorversäuerungsschrittes wenigstens ein Polysaccharid spaltendes Enzym, wenigstens eine Lipase und wenigstens eine Protease zugegeben wird.

Noch weiter bevorzugt wird dem zu behandelndem Prozesswasser vor oder während des Vorversäuerungsschrittes wenigstens ein Polysaccharid spaltendes Enzym, wenigstens ein Oligosaccharid spaltendes Enzym, wenigstens eine Lipase und wenigstens eine Protease zugegeben wird.

Gemäß einer ganz besonders bevorzugten Ausführungsform der vorliegenden Erfindung ist es vorgesehen, dem zu behandelndem Prozesswasser vor oder während des Vorversäuerungsschrittes eine Mischung zuzugeben, welche Cellulase, Amylase, Glucoamylase, Xylanase, alpha-Galactosidase, Lactase, Maltase, Invertase, Lipase und Protease enthält.

Gemäß einer höchst bevorzugten Ausführungsform der vorliegenden Erfindung wird dem Prozesswasser vor oder während des Vorversäuerungsschrittes wenigstens ein Polysaccharid spaltendes Enzym und bevorzugt wenigstens eine Amylase, aber während des Prozesswasseraufbereitungsschrittes keine Protease zugegeben.

Wenn dem Prozesswasser mehr als ein Enzym zugegeben wird, können die Enzyme dem Prozesswasser an einer Stelle vor oder während der Vorversäuerung gemeinsam oder getrennt voneinander zugegeben werden.

Unabhängig davon, ob dem Prozesswasser ein oder mehrere verschiedene Enzyme zugesetzt werden, kann dem Prozesswasser jedes der zuzusetzenden Enzyme an zwei oder mehr verschiedenen Stellen, also mehrmals, zugegeben werden. Beispielsweise kann dem Prozesswasser ein Teil von jedem der zuzusetzenden Enzyme während der Vorversäuerung durch eine Zufuhrleitung in den Vorversäuerungsreaktor zugegeben werden, wohingegen der andere Teil von jedem der zuzusetzenden Enzyme dem Prozesswasser nach der Vorversäuerung und/oder nach dem anaeroben Reinigungsschritt zugegeben wird. Das zuletzt zugegebene Enzym kann dann auf das Prozesswasser einwirken, bis dieses über den Prozesswasserkreislauf wieder in den Vorversäuerungsreaktor gelangt.

In Weiterbildung des Erfindungsgedankens wird es vorgeschlagen, dem Prozesswasser vor oder während der Vorversäuerung und vor, während oder nach der Enzymzugabe ein oder mehrere Nährstoffe zuzugeben, um für die Wirkung der Hydrolyse- und Versäuerungsbakterien optimale Bedingungen einzustellen. Vorzugsweise werden als Nährstoffe mindestens eine Stickstoffquelle, wie Harnstoff, und/oder mindestens eine Phosphorquelle, wie Phosphorsäure, zugegeben. Besonders bevorzugt werden dem Prozesswasser als Nährstoffe eine Mischung aus mindestens einer Stickstoffquelle und mindestens einer Phosphorquelle zugegeben und ganz besonders bevorzugt eine Mischung aus Harnstoff und Phosphorsäure. Gute Ergebnisse werden insbesondere erhalten, wenn das Verhältnis von chemischem Sauerstoffbedarf (CSB) zu Stickstoffquelle zu Phosphorquelle auf 200:3:1 bis 500:10:1, besonders bevorzugt auf 300:5:1 bis 400:9:1, wie beispielsweise auf etwa 350:7:1 eingestellt wird.

Zusätzlich zu dem wenigstens einen Vorversäuerungsschritt sowie zu dem wenigstens einen anaeroben Reinigungsschritt kann der Prozesswasseraufbereitungsschritt des erfindungsgemäßen Verfahrens auch einen oder mehrere andere Reinigungsteilschritte umfassen, wie optional ein oder mehrere Stoffrückgewinnungsschritte, ein oder mehrere Kalkeliminationsschritte und/oder ein oder mehrere Filtrationsschritte, bevor das Prozesswasser über eine Rückfuhrleitung zurück in beispielsweise die Stoffaufbereitungsvorrichtung der Altpapieraufbereitungsvorrichtung zurückgeführt wird. Bei dieser Ausführungsform ist es vorteilhaft, dem Prozesswasser ein Teil von jedem der zuzusetzenden Enzyme während der Vorversäuerung durch eine Zufuhrleitung in den Vorversäuerungsreaktor zuzugeben, wohingegen der andere Teil von jedem der zuzusetzenden Enzyme dem Prozesswasser nach der Vorversäuerung und/oder nach dem anaeroben Reinigungsschritt in die Rückfuhrleitung zugegeben wird. Das zuletzt zugegebene Enzym kann dann auf das Prozesswasser einwirken, bis dieses über die Rückführleitung und Stoffaufbereitungsvorrichtung bzw. Papiermaschine wieder in den Vorversäuerungsreaktor gelangt.

Vorzugsweise umfasst der Prozesswasseraufbereitungsschritt auch wenigstens einen und bevorzugt genau einen Entkalkungsschritt, um die Menge an in dem Prozesswasser im Kreislauf geführten Kalk zu verringern. Eine zu hohe Kalkkonzentration würde nicht nur insbesondere den anaeroben Reinigungsschritt bzw. die dabei eingesetzten Mikroorganismen, sondern durch unkontrollierte Ablagerungen auch den Papierherstellungsprozess stören.

Eine gute Entkalkungseffizienz wird insbesondere erreicht, wenn das Prozesswasser in dem Entkalkungsschritt einem Druckentspannungsflotationsschritt unterzogen wird und insbesondere einem Druckentspannungsflotationsschritt, bei dem die Druckdifferenz zwischen der Druckbeaufschlagung und der Entspannung wenigstens 2 bar, bevorzugt wenigstens 3 bar, besonders bevorzugt wenigstens 4 bar und ganz besonders bevorzugt wenigstens 5 bar beträgt.

Bei der vorstehenden Ausführungsform wird das Prozesswasser vorzugsweise dem Entkalkungsschritt nach dem anaeroben Reinigungsschritt zugeführt und der pH-Wert des Prozesswassers während dem Druckentspannungsflotationsschritt auf 7,0 bis 8,5 und bevorzugt auf 7,5 bis 8,5 eingestellt.

Nachfolgend wird die vorliegende Erfindung unter Bezug auf die Zeichnung näher beschrieben, in der:
- Fig. 1: eine schematische Ansicht einer Anlage zur Herstellung von Papier aus Altpapier gemäß eines Ausführungsbeispiels der vorliegenden Erfindung zeigt.
- Fig. 2: eine schematische Ansicht einer Anlage zur Herstellung von Papier aus Altpapier, wie sie für die Beispiele eingesetzt worden ist.
- Fig. 3: eine Diagramm mit den Ergebnissen der Beispiele.

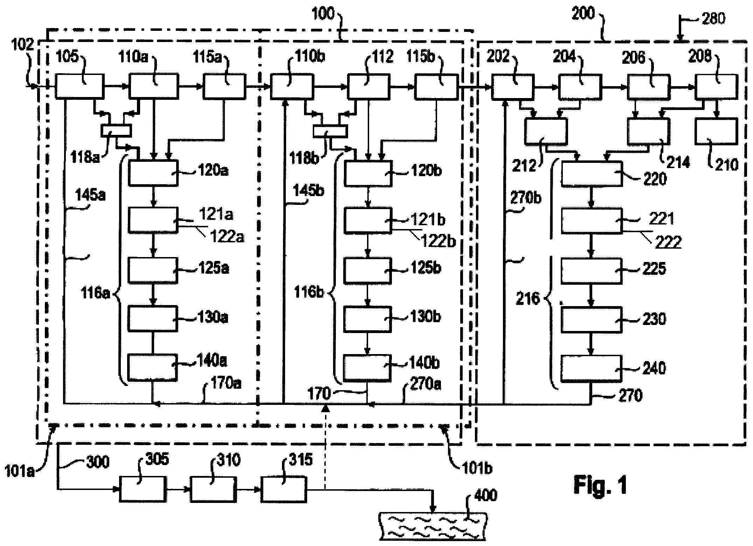

Die in der Fig. 1 gezeigte Anlage umfasst eine Altpapieraufbereitungsvorrichtung 100 sowie eine stromabwärts davon angeordnete, mit der Altpapieraufbereitungsvorrichtung 100 verbundene Papiermaschine 200. Dabei umfasst die Altpapieraufbereitungsvorrichtung 100 zwei voneinander im Wesentlichen entkoppelte und in der Fig. 1 durch die punktgestrichelten Kästen angedeutete Stufen bzw. Loops 101a und 101b.

Die erste Stufe 101a der Papieraufbereitungsvorrichtung 100 umfasst einen Rohstoffeinlass 102, einen Pulper bzw. Stoffauflöser 105, eine Sortiereinrichtung 110a sowie eine Entwässerungseinheit 115a, welche sequentiell angeordnet und jeweils miteinander verbunden sind. Unter Pulper bzw. Stoffauflöser 105 wird im Sinne der vorliegenden Erfindung nicht nur eine, wie in der Fig. 1 schematisch gezeigt, aus einem Vorrichtungsteil bestehende Einrichtung verstanden, sondern insbesondere auch eine mehrere einzelne Vorrichtungsteile umfassende Vorrichtungskombination, welche alle für die Stoffauflösung notwendigen Bauteile bzw. Aggregate beinhaltet. Gleiches gilt auch für die Sortiereinrichtung 110a, die Entwässerungseinheit 115a und alle anderen in der Fig. 1 gezeigten Bauteile.

Der Stoffauflöser 105 und die Sortiereinrichtung 110a sind jeweils über eine Leitung mit einer Rejektbehandlungseinheit 118a verbunden.

Zudem umfasst die erste Stufe 101a der Altpapieraufbereitungsvorrichtung 100 eine Prozesswasseraufbereitungseinheit 116a, der über entsprechende Leitungen aus der Rejektbehandlungseinheit 118a, aus der Sortiervorrichtung 110a sowie aus der Entwässerungseinheit 115a das in diesen Anlagenteilen anfallende Prozesswasser zugeführt wird. Die Prozesswasseraufbereitungseinheit 116a besteht aus einer Stoffrückgewinnungseinheit 120a, einem Vorversäuerungsreaktor 121a, einem mit anaeroben Mikroorganismen versetzten anaeroben Reaktor 125a, einer Kalkeliminationseinheit 130a sowie einer Filtrationseinheit 140a, welche sequentiell angeordnet und miteinander verbunden sind. Von der Filtrationseinheit 140a führt eine Rückführleitung 145a zu dem Stoffauflöser 105 zurück. Zusätzlich zu der Stoffrückgewinnungseinheit 120a oder anstelle der Stoffrückgewinnungseinheit 120a kann in der Altpapieraufbereitungsvorrichtung 100 eine Entstoffungseinheit (nicht dargestellt) vorgesehen sein. Erfindungsgemäß weist der Vorversäuerungsreaktor 121a eine Enzymzufuhrleitung 122 auf, über welche dem Vorversäuerungsreaktor 121a eine oder mehrere Enzyme zugeführt werden können.

Der Vollständigkeit halber sei angemerkt, dass die Filtrationseinheit 140a optional ist und auf diese auch verzichtet werden kann, also das Filtrat aus der Kalkeliminationseinheit 130a direkt in die Rückführleitung 145a zurückgeführt werden kann. Zudem kann vor oder nach der Sortiervorrichtung 110a ein Zentrifugalsortierer vorgesehen werden. Ferner kann die Stoffrückgewinnungseinheit 120a mit einer Entstoffungseinheit, beispielsweise ausgebildet als Mikroflotationseinrichtung, kombiniert sein. Außerdem kann zwischen der Stoffrückgewinnungseinheit 120a und dem Vorversäuerungsreaktor 121a eine Temperaturreguliereinheit zur Kühlung oder Erwärmung angeordnet werden, um die optimale Temperatur des Prozesswassers für die Vorversäuerungsstufe einzustellen. Schließlich kann eine weitere Enzymzufuhrleitung vorgesehen sein, welche in die Rückführleitung 145a mündet, um dem Prozesswasser dort weiteres Enzym zuzugeben, welches in dem Prozesswasser verweilt, bis das Prozesswasser erneut in den Vorversäuerungsreaktor 121a gelangt.

Im Unterschied zu der ersten Stufe 101a umfasst die zweite Stufe 101b der Altpapieraufbereitungsvorrichtung 100 eine mit der Entwässerungseinheit 115a verbundene Sortiervorrichtung 110b, eine Oxidationseinheit bzw. Reduktionseinheit 112 sowie eine Entwässerungseinheit 115b, welche sequentiell angeordnet und miteinander verbunden sind. Zudem weist zweite Stufe 101b eine Prozesswasseraufbereitungseinheit 116b auf, welche analog zu der Prozesswasseraufbereitungseinheit 116a der ersten Stufe 101a aufgebaut ist, wobei die Filtrationseinheit 140b der zweiten Stufe 101b der Altpapieraufbereitungsvorrichtung 100 über eine Rückführleitung 145b mit der Sortiervorrichtung 110b und über eine Teilstromleitung 170a mit der aus der Filtrationseinheit 140a kommenden Rückführleitung 145a der ersten Stufe 101a der Altpapieraufbereitungsvorrichtung 100 verbunden ist. Während die Sortiervorrichtung 110b und die Oxidationseinheit bzw. Reduktionseinheit 112 über entsprechende Leitungen mit einer Rejektbehandlungseinheit 118b verbunden sind, ist die Entwässerungseinheit 115b direkt mit der Stoffrückgewinnungseinheit 120b der Prozesswasseraufbereitungseinheit 116b verbunden. Zudem führt eine Leitung von der Oxidationseinheit bzw. Reduktionseinheit 112 zu der Stoffrückgewinnungseinheit 120b.

Der Vollständigkeit halber sei angemerkt, dass auch die Filtrationseinheit 140b optional ist und auf diese auch verzichtet werden kann, also das Filtrat aus der Kalkeliminationseinheit 130b direkt in die Rückführleitung 145b zurückgeführt werden kann. Zudem kann vor oder nach der Sortiervorrichtung 110b ein Zentrifugalsortierer vorgesehen werden. Ferner kann die Stoffrückgewinnungseinheit 120b mit einer Entstoffungseinheit, beispielsweise ausgebildet als Mikroflotationseinrichtung, kombiniert sein. Außerdem kann zwischen der Stoffrückgewinnungseinheit 120a und dem Vorversäuerungsreaktor 121b eine Temperaturreguliereinheit zur Kühlung oder Erwärmung angeordnet werden, um die optimale Temperatur des Prozesswassers für die Vorversäuerungsstufe einzustellen. Schließlich kann eine weitere Enzymzufuhrleitung vorgesehen sein, welche in die Rückführleitung 145b mündet, um dem Prozesswasser dort weiteres Enzym zuzugeben, welches in dem Prozesswasser verweilt, bis das Prozesswasser erneut in den Vorversäuerungsreaktor 121b gelangt.

Die Papiermaschine 200 umfasst einen Zentrifugalsortierer 202, eine Feinsortiervorrichtung 204, eine Papiermaschinen-Formpartie 206, eine Papiermaschinen-Presspartie 208 sowie eine Trockenpartie 210, welche sequentiell angeordnet und miteinander verbunden sind. Der Zentrifugalsortierer 202 sowie die Feinsortiervorrichtung 204 sind mit einer Rejektbehandlungseinheit 212 verbunden und die Papiermaschinen-Formpartie 206 sowie die Papiermaschinen-Presspartie 208 sind mit einer Faserrückgewinnungseinheit 214 verbunden. Zudem sind die Rejektbehandlungseinheit 212 sowie die Faserrückgewinnungseinheit 214 über entsprechende Leitungen mit einer Prozesswasseraufbereitungseinheit 216 verbunden, welche aus einer Entstoffungseinheit 220, einem Vorversäuerungsreaktor 221, einem mit anaeroben Mikroorganismen versetzten anaeroben Reaktor 225, einer Kalkeliminationseinheit 230 und einer Filtrationseinheit 240 besteht. Zudem führt eine Rückführleitung 270 von der Filtrationseinheit 240 der Papiermaschine 200 in die Leitung 170 der zweiten Stufe 101b der Altpapieraufbereitungsvorrichtung 100. Die Faserrückgewinnungseinheit 214 und die Entstoffungseinheit 220 können auch in einem beispielsweise als Mikroflotation ausgebildeten Vorrichtungsteil kombiniert sein.

Der Vollständigkeit halber sei angemerkt, dass zwischen der Entstoffungseinheit 220 und dem Vorversäuerungsreaktor 221 eine Temperaturreguliereinheit zur Kühlung oder Erwärmung angeordnet werden, um die optimale Temperatur des Prozesswassers für die Vorversäuerungsstufe einzustellen. Schließlich kann eine weitere Enzymzufuhrleitung vorgesehen sein, welche in die Filtratleitung nach der Kühlung mündet, um dem Prozesswasser dort weiteres Enzym zuzugeben, welches in dem Prozesswasser verweilt, bis das Prozesswasser in den Vorversäuerungsreaktor 221 gelangt.

Ferner ist in dem Bereich der Papiermaschine 200 eine Frischwasserzufuhrleitung 280 vorgesehen, über welche der Papiermaschine Frischwasser zugeführt werden kann. Dabei kann die Frischwasserzufuhrleitung 280 an verschiedenen Stellen in der Papiermaschine 200 münden, beispielsweise in der Zufuhrleitung zu dem Zentrifugalsortierer 202 und/oder in der Papiermaschinen-Formpartie 206 und/oder der Papiermaschinen-Presspartie 208, weswegen die genaue Position der Frischwasserzufuhrleitung 280 in der Fig. 1 nicht dargestellt ist. Zudem ist in der Anlage eine Prozesswasserleitung 300 vorgesehen, über die überschüssiges Prozesswasser aus der Anlage abgeführt werden kann. Auch die Prozesswasserleitung 300 kann an verschiedenen Positionen der Anlage angeordnet sein, beispielsweise an der Leitung 170, weswegen auch die genaue Position dieser Prozesswasserleitung 300 in der Fig. 1 nicht dargestellt ist. Die Prozesswasserleitung für überschüssiges Prozesswasser 300 führt in eine mechanische Entstoffungseinheit 305, der eine Kühleinheit 310 sowie eine biologische Behandlungseinheit 315 nachgeschaltet ist. Von der biologischen Behandlungseinheit 315, welche eine Kalkeliminationseinheit und eine Filtrationseinheit umfassen kann, führt eine Leitung entweder in eine kommunale (oder Verbands-) Kläranlage zur weiter gehende Reinigung oder in ein öffentliches Gewässer 400, beispielsweise in einen Fluss; es kann jedoch auch ein Teilstrom oder das ganze behandelte Prozesswasser bei Bedarf in die Papiermaschine oder die Stoffaufbereitung zurückgeführt werden.

Bei dem Betrieb der Anlage wird kontinuierlich Altpapier über den Rohstoffeinlass 102 in den Stoffauflöser 105 der ersten Stufe 101a der Altpapieraufbereitungsvorrichtung 100 eingeführt, in dem das Altpapier mit über die Rückführleitung 145a zugeführten Prozesswasser vermischt und zur Gewinnung der Fasern zerkleinert wird. Während die in dem Stoffauflöser 105 gewonnenen Fasern als Fasersuspension kontinuierlich in die Sortiervorrichtung 110a überführt werden, wird das in dem Stoffauflöser 105 anfallende Prozesswasser, welches Reste an Fasern enthalten kann zunächst in die Rejektbehandlungseinheit 118a geführt und von dort nach Abtrennung der Rejekte in die Stoffrückgewinnungseinheit 120a der Prozesswasseraufbereitungseinheit 116a der Altpapieraufbereitungsvorrichtung 100 geleitet. In der Sortiervorrichtung 110a werden aus der Fasersuspension, beispielsweise durch Siebbarrieren und typischerweise mehrstufig, leichte oder schwere Ungehörigkeiten, welche größer als Fasern sind, wie beispielsweise grobe Verschmutzungen in Form von Plastikfolien und Plastikstücken, aussortiert. Zudem kann in der Sortiervorrichtung 110a auch eine Flotation zum Zweck der Elimination von Pigmenten, Tinte und Farbpartikeln (de-inking) durchgeführt werden. Zudem können bei der Stoffwäsche Feinstoffe und Asche abgetrennt werden. In der stromabwärts der Sortiervorrichtung 110a angeordneten Entwässerungseinheit 115a, welche vorzugsweise als Entwässerungsfilter und/oder als Schneckenpresse ausgebildet ist, wird die Fasersuspension durch Entfernen von Prozesswasser eingedickt, um als eingedickte Fasersuspension von der Entwässerungseinheit 115a in die Sortiervorrichtung 110b der zweiten Stufe 101b der Altpapieraufbereitungsvorrichtung 100 zu gelangen. Ein Teilstrom des in der Sortiervorrichtung 110a anfallenden Prozesswassers wird in die Rejektbehandlungseinheit 118a geführt, wohingegen der andere Teilstrom des in der Sortiervorrichtung 110a anfallenden Prozesswassers zusammen mit dem in der Entwässerungseinheit 115a der ersten Stufe 101a anfallenden Prozesswasser über entsprechende Leitungen direkt in die Stoffrückgewinnungseinheit 120a der Prozesswasseraufbereitungseinheit 116a der ersten Stufe 101a der Altpapieraufbereitungsvorrichtung 100 geführt wird, in der aus dem Prozesswasser darin enthaltene Faserstoffe abgetrennt werden, welche erneut dem Aufbereitungsprozess zugeführt werden. Vorzugsweise ist die Stoffrückgewinnungseinheit 120a als Druckentspannungsflotationsvorrichtung ausgestaltet.

Bei der in der Fig. 1 dargestellten Anlage wird das in der Rejektbehandlungseinheit 118a anfallende Prozesswasser in die Stoffrückgewinnungseinheit 120a geleitet. Von der Stoffrückgewinnungseinheit 120a wird kontinuierlich von Faserstoffen befreites Prozesswasser zunächst in den Vorversäuerungsreaktor 121a geleitet, in dem das Prozesswasser einer Hydrolyse und Azidifikation unterworfen wird. Über die Enzymzufuhrleitung 122 wird dem Vorversäuerungsreaktor 121a erfindungsgemäß wenigstens ein Saccharid spaltendes Enzym, bevorzugt eine Mischung aus wenigstens einem Polysaccharid spaltendem Enzym, wenigstens einem Oligosaccharid spaltendem Enzym, wenigstens einer Lipase und wenigstens einer Protease, und höchst bevorzugt wenigstens eine Amylase, aber keine Protease zugeführt. Das bzw. die Enzyme(e) können dabei dem Vorversäuerungsreaktor 121a als Feststoff oder bevorzugt als wässrige Lösung zugeführt werden. Dabei kann dem Vorversäuerungsreaktor 121a zwecks Einstellung des Prozesswassers auf einen optimalen Temperaturbereich eine Kühl- oder Wärmeeinheit (nicht dargestellt) vorgeschaltet sein. Danach wird das Prozesswasser in den mit anaeroben Mikroorganismen versetzten anaeroben Reaktor 125a geleitet, in dem chemische und biologische Verunreinigungen durch die Wirkung der anaeroben Mikroorganismen in dem Prozesswasser gespalten werden. Aus dem anaeroben Reaktor 125a wird das so von den chemischen und biologischen Verunreinigungen befreite Prozesswasser in die stromabwärts gelegene Kalkeliminationseinheit 130a geleitet, welche vorzugsweise als Druckentspannungsflotationsvorrichtung ausgebildet ist. In dieser Kalkeliminationseinheit 130a werden die in dem Prozesswasser vorliegenden Carbonate und Hydrogencarbonate weitestgehend als Kalk ausgefällt und aus dem Prozesswasser entfernt. Zudem findet in der Kalkeliminationseinheit 130a eine so genannte "Flash-Oxidation" statt, bei der in dem anaeroben Reaktor 125a gebildete Stoffwechselendprodukte der Mikroorganismen durch die zugeführte gelöste Luft bzw. durch Luftübersättigung oxidiert werden, wodurch ein zusätzlicher oxidativer Abbau der in dem Prozesswasser enthaltenden Schmutz- und/oder Störstoffe erfolgt und eine Geruchsemission weitgehend reduziert wird. Die Kalkausfällung erfolgt dabei durch Verschieben des Kalk-Kohlensäure-Gleichgewichts, welche entweder durch Zudosierung geeigneter Chemikalien, insbesondere eines pH-Einstellmittels, durch das der pH-Wert des Prozesswassers auf einen neutralen oder geringfügig alkalischen Wert, welcher vorzugsweise zwischen 7,5 und 8,5 beträgt, eingestellt wird, erreicht wird oder durch Strippung durch die Belüftung des gelösten Kohlendioxid, welches ein Produkt des Metabolismus der Mikroorganismen in dem anaeroben Reaktor ist. Kohlendioxid hat eine relativ hohe Löslichkeit in Wasser, weswegen das Filtrat aus dem anaeroben Reaktor mit Kohlendioxid gesättigt ist. Dieses Kohlendioxid wird in dem Strippungsreaktor durch die intensive Mischung und Luftzufuhr ausgestrippt. Die Ausstrippung des Kohlendioxids bewirkt eine Verschiebung des pH-Werts in Richtung alkalisch. Der resultierende höhere pH wiederum bewirkt eine Ausfällung des Calciums in Form von Kalk. Zudem können dem Prozesswasser zu diesem Zweck auch Fällungs- und/oder Flockungshilfsmittel zugesetzt werden, um die Ausfällung von Kalk und die Bildung von Kalkflocken mit einer für eine effektive Abtrennung geeigneten Größe zu erleichtern. Zudem wird in der Druckentspannungsflotationsvorrichtung Druckgas, beispielsweise Druckluft, eingeführt, und die so erzeugte Mischung mit Druck beaufschlagt, bevor diese Mischung einem verminderten Druck ausgesetzt wird. Dadurch perlt das Druckgas aus der Mischung aus und strömt in Form kleiner Bläschen in der Vorrichtung nach oben, wodurch Feststoffe, insbesondere die gebildeten Kalkflocken, mitgerissen und aus dem Prozesswasser abgetrennt werden. Von der Kalkeliminationsvorrichtung 130a wird das so entkalkte, gereinigte Prozesswasser einer Filtrationseinheit 140a zugeführt, welche beispielsweise als Sandfiltrationseinheit ausgebildet ist, um das restliche partikuläre Material aus dem Prozesswasser zu entfernen. Zudem kann der Filtrationseinheit 140a eine Entsalzungseinheit (nicht dargestellt) nachgeschaltet sein.

Über die Rückführleitung 145a wird das in der Prozessaufbereitungseinheit 116a der ersten Stufe 101a der Altpapieraufbereitungsvorrichtung 100 gereinigte und entkalkte Prozesswasser in den Pulper bzw. Stoffauflöser 105 zurückgeführt.

Die aus der Entwässerungseinheit 115a der ersten Stufe 101a der Altpapieraufbereitungsvorrichtung 100 abgeführte, eingedickte Fasersuspension gelangt in die Sortierstufe 110b und von dort in eine Oxidationseinheit bzw. Reduktionseinheit 112, bevor die Fasersuspension in der Entwässerungseinheit 115b der zweiten Stufe 101b eingedickt wird, um aus der Fasersuspension so viel wie möglich des Prozesswassers zu entfernen. Analog zu der ersten Stufe 101a der Altpapieraufbereitungsvorrichtung 100 wird das in der Sortiervorrichtung 110b anfallende Prozesswasser und ein Teilstrom des in der Oxidationseinheit bzw. Reduktionseinheit 112 anfallenden Prozesswassers in die Rejektbehandlungseinheit 118b geführt und das dort anfallende Prozesswasser in die Stoffrückgewinnungseinheit 120b geleitet. Der andere Teilstrom des in der Oxidationseinheit bzw. Reduktionseinheit 112 anfallenden Prozesswassers sowie das in der Entwässerungseinheit 115b anfallende Prozesswasser werden direkt in die Stoffrückgewinnungseinheit 120b der Prozesswasseraufbereitungseinheit 116b der zweiten Stufe 101b der Altpapieraufbereitungsvorrichtung 100 geleitet und in der Prozesswasseraufbereitungseinheit 116b gereinigt sowie entkalkt. Das so behandelte Prozesswasser gelangt von der Filtrationseinheit 140b über die Leitung 170 und die Rückführleitung 145b größtenteils in die Sortiervorrichtung 110b zurück, wohingegen ein möglicher Überschuss an Prozesswasser über die Teilstromleitung 170a zu der ersten Stufe 101a der Altpapieraufbereitungsvorrichtung 100 zurückgeführt und in die zu dem Stoffauflöser 105 führende Rückführleitung 145a geleitet wird.

In der Papiermaschine 200 wird die kontinuierlich aus der Entwässerungseinheit 115b zugeführte, eingedickte Faserstoffsuspension mittels des Zentrifugalsortierers 202, in dem Teile mit einem höheren oder niedrigen spezifischen Gewicht als Wasser abgetrennt werden, der Feinsortiervorrichtung 204, der Papiermaschinen-Formpartie 206, der Papiermaschinen-Presspartie 208 und der Trockenpartie 210 zu Papier verarbeitet. Während das in den Anlagenteilen 202 und 204 anfallende Prozesswasser in die Rejektbehandlungseinheit 212 geführt wird, wird das in den Anlagenteilen 206 und 208 anfallende Prozesswasser in die Faserrückgewinnungseinheit 214 geleitet. Während die Rejekte in der Rejektbehandlungseinheit 212 entwässert werden, wird in der Faserrückgewinnungseinheit 214 das aus der Papiermaschinen-Formpartie 206 und der Papiermaschinen-Presspartie 208 stammende Prozesswasser vorentstofft und aus diesem Fasern abgetrennt. In der Rejektbehandlungseinheit 212 sowie in der Faserrückgewinnungseinheit 214 anfallendes Prozesswasser wird kontinuierlich in die Prozesswasseraufbereitungseinheit 216 der Papiermaschine 200 geleitet und durchströmt dort sequentiell die Entstoffungseinheit 220, die optionale Kühl- oder Wärmeeinheit, den Vorversäuerungsreaktor 221, in dem dem Prozesswasser das Enzym zugegeben wird, den anaeroben Reaktor 225, die Kalkeliminationseinheit 230 und die Filtrationseinheit 240, welche wie die zuvor beschriebenen entsprechenden Anlagenteile der Prozesswasseraufbereitungseinheiten 116a, 116b der Altpapieraufbereitungsvorrichtung 100 arbeiten. Alternativ dazu kann das in der Rejektbehandlungseinheit 212 anfallende Prozesswasser als Abwasser aus der Anlage abgeführt werden und nur das in der Faserrückgewinnungseinheit 214 anfallende Prozesswasser kontinuierlich durch die Prozesswasseraufbereitungseinheit 216 der Papiermaschine 200 geleitet werden. Das aus der Filtrationseinheit 240 abgezogene, gereinigte und entkalkte Prozesswasser wird über die Rückführleitung 270 und die Teilstromleitung 270b größtenteils in den Zentrifugalsortierer 202 der Papiermaschine 200 zurückgeleitet, wohingegen ein möglicher Überschuss an Prozesswasser über die Teilstromleitung 270a in die aus der Filtrationseinheit 140b der zweiten Stufe 101b der Altpapieraufbereitungsvorrichtung 100 kommende Leitung 170 geleitet wird.

Ein vollkommen geschlossener Prozesswasserkreislauf ist grundsätzlich möglich, würde aber eventuell auf lange Sicht zu Anreicherungen von Störstoffen führen, die letztendlich die Wirtschaftlichkeit der Anlage beeinträchtigen würden. Dem Prozess, vorzugsweise der Papiermaschine 200, wird über die Frischwasserzufuhrleitung 280 kontinuierlich ein, bezogen auf die Menge an in der Trockenpartie verdunstendem Wasser, relativ geringer Anteil an Frischwasser zugeführt. Es besteht die Möglichkeit bei Produktionen mit besonderen Anforderungen an niedrig Störstoffgehalt, wie z.B. Salze, eine entsprechende Menge an Prozesswasser über die Prozesswasserleitung 300 aus dem Prozess zu entfernen und über die Entstoffungseinheit 305, die Kühleinheit 310 und die biologische Behandlungseinheit 315, welche auch eine Kalkeliminationseinheit und/oder Filtrationseinheit umfassen kann, weiter aufgereinigt, bevor dieser Strom als Abwasser in öffentliche Kanalisation oder Gewässer 400 abgeleitet wird. Zudem kann auch das, wie vorstehend erwähnt, optional aus den Rejektbehandlungseinheiten 118a, 118b, 212 abgeführte Prozesswasser über die Prozesswasserleitung 300 aus dem Prozess entfernt und über die Entstoffungseinheit 305, die Kühleinheit 310 und die biologische Behandlungseinheit 315 aufgereinigt und in den Prozess zurückgeführt zu werden.

In der Fig. 1 umfasst die Anlage eine zweistufige Stoffaufbereitung. Selbstverständlich ist es auch möglich, insbesondere bei der Herstellung von mehrlagigem Papier, zwei oder mehr parallele Stoffaufbereitungen vorzusehen.

Nachfolgend wird die vorliegende Erfindung anhand von die vorliegende Erfindung illustrierenden, diese aber nicht einschränkenden Beispiele näher beschrieben.

### Beispiele

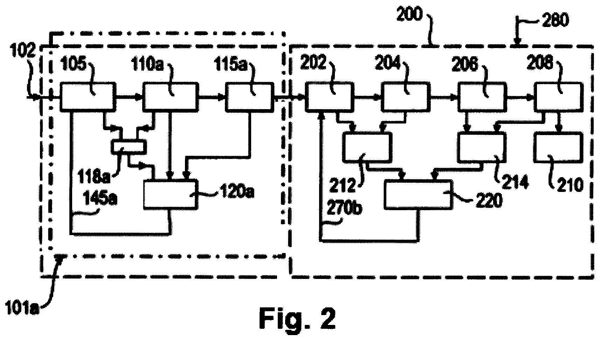

In einer in der Figur 2 gezeigten Anlage, in der die dargestellten Anlagenteile den in der Figur 1 gezeigten mit gleichem Bezugszeichen entsprechen, wurde als Biozid Ammoniumbromid in einer Menge von 5 kg/t Papier enthaltendes Prozesswasser im Kreislauf geführt.

Zu demselben Zeitpunkt wurden aus der Rückführleitung 145a drei Proben Prozesswasser entnommen. Eine Probe wurde als Vergleichsbeispiel 1 unbehandelt belassen. Während die zweite Probe als Vergleichsbeispiel 2 mit Harnstoff und Phosphorsäure als Nährstoffen versetzt wurde, wobei das Verhältnis CSB zu Harnstoff zu Phosphorsäure auf 350:7:1 eingestellt wurde, wurde die dritte Probe als Beispiel 1 mit Harnstoff und Phosphorsäure im Verhältnis CSB zu Harnstoff zu Phosphorsäure von 350:7:1 versetzt und zudem wurden folgende Enzyme in folgenden Mengen (jeweils pro Liter des Prozesswassers) zugegeben: Pilz-Amylase 3000 DU,
Maltase 89 DP,
Cellulase 538 CU,
Glucoamylase 9 AGU,
Bromelain 112.000 PU,
Fibrazym 6 mg/l,
Xylanase 1.795 XU,
Invertase 67 XU,
Lipase 471 FIP und
Alpha-Galactosidase 90 GalU.

Die Proben wurden bei 37°C auf einem Schüttler inkubiert und zu 4 verschiedenen Zeitpunkten wurden Proben entnommen und bezüglich des Gehalts an flüchtigen Fettsäuren (VFA = volatile fatty acids) untersucht.

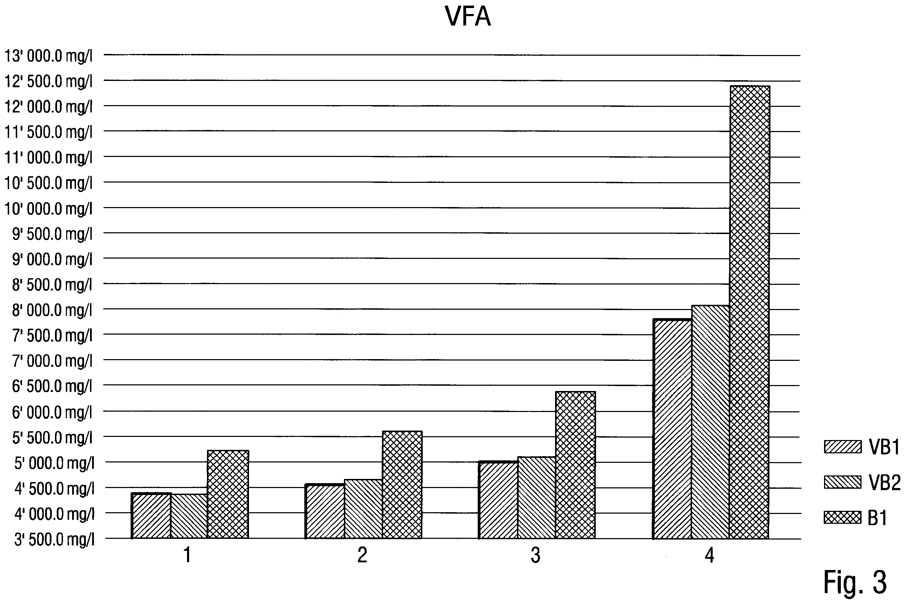

Es wurden die in der Figur 3 dargestellten Ergebnisse erhalten. Dabei stehen:
VB1 für Vergleichsbeispiel 1,
VB2 für Vergleichsbeispiel 3,
B1 für Beispiel 1,
1 für 2 Stunden,
2 für 4 Stunden,
3 für 6 Stunden und
4 für 8 Stunden.

Wie der Figur 3 entnommen werden kann, fand bei den Proben der Vergleichsbeispiele 1 und 2, in denen das Prozesswasser keine Saccharid spaltenden Enzyme enthielt, nur eine sehr langsame Versäuerung der Polysaccharide zu flüchtigen Fettsäuren statt, wohingegen die Versäuerung in den Proben des Beispiels 1, in dem das Prozesswasser Saccharid, Protein und Lipid spaltende Enzyme enthielt, zu allen Zeitpunkten signifikant höher als in den Vergleichsbeispielen war.

### Bezugszeichenliste

- 100: Altpapieraufbereitungsvorrichtung
- 101a: erste Stufe der Altpapieraufbereitungsvorrichtung
- 101b: zweite Stufe der Altpapieraufbereitungsvorrichtung
- 102: Rohstoffeinlass
- 105: Pulper/Stoffauflöser
- 110a, 110b: Sortiervorrichtung
- 112: Oxidationseinheit/Reduktionseinheit
- 115a, 115b: Entwässerungseinheit
- 116a, 116b: Prozesswasseraufbereitungseinheit der Stoff- /Altpapieraufbereitungsvorrichtung
- 118a, 118b: Rejektbehandlungseinheit
- 120a, 120b: Stoffrückgewinnungseinheit
- 121a, 121b: Vorversäuerungsreaktor
- 122a, 122b: Enzymzufuhrleitung
- 125a, 125b: anaerober Reaktor
- 130a, 130b: Kalkeliminationseinheit
- 140a, 140b: Filtrationseinheit
- 145a, 145b: Rückführleitung
- 170: Leitung
- 170a: Teilstromleitung
- 200: Papiermaschine
- 202: Zentrifugalsortierer
- 204: Feinsortiervorrichtung
- 206: Papiermaschinen-Formpartie
- 208: Papiermaschinen-Presspartie
- 210: Trockenpartie
- 212: Rejektbehandlungseinheit
- 214: Faserrückgewinnungseinheit
- 216: Prozesswasseraufbereitungseinheit der Papiermaschine
- 220: Entstoffungseinheit
- 221: Vorversäuerungsreaktor
- 222: Enzymzufuhrleitung
- 225: anaerober Reaktor
- 230: Kalkeliminationseinheit
- 240: Filtrationseinheit
- 270: Rückführleitung
- 270a, 270b: Teilstromleitung
- 280: Frischwasserzufuhrleitung
- 300: Prozesswasserleitung
- 305: mechanische Entstoffungseinheit
- 310: Kühleinheit
- 315: biologische Behandlungseinheit
- 400: öffentliches Gewässer

## Patentansprüche

1. Verfahren zur Reinigung von in einer Anlage zur Altpapieraufbereitung im Kreislauf geführten Prozesswasser umfassend einen Prozesswasseraufbereitungsschritt, welcher wenigstens einen Vorversäuerungsschritt sowie wenigstens einen anaeroben Reinigungsschritt umfasst, wobei wenigstens ein Teil des zu reinigenden Prozesswassers in dem wenigstens einen Vorversäuerungsschritt einer Hydrolyse und einer Versäuerung unterworfen wird und das so behandelte Prozesswasser anschließend in dem wenigstens einen anaeroben Reinigungsschritt mit anaeroben Mikroorganismen kontaktiert wird, um in dem Prozesswasser enthaltenen Verunreinigungen abzubauen, wobei dem Prozesswasser vor oder während des wenigstens einen Vorversäuerungsschrittes wenigstens ein Saccharid spaltendes Enzym zugegeben wird und der pH-Wert des Prozesswassers zumindest während des wenigstens einen Vorversäuerungsschrittes und während des wenigstens einen anaeroben Reinigungsschrittes auf 8,0 oder kleiner eingestellt wird, wobei während der gesamten Prozesswasseraufbereitung weder eine alkalische Hydrolyse noch eine chemische Hydrolyse durchgeführt wird.

2. Verfahren nach Anspruch 1, **dadurch gekennzeichnet, dass** der pH-Wert des Prozesswassers zumindest vom Beginn des wenigstens einen Vorversäuerungsschrittes bis zum Abschluss des wenigstens einen anaeroben Reinigungsschrittes auf 8,0 oder kleiner eingestellt wird.

3. Verfahren nach Anspruch 1 oder 2, **dadurch gekennzeichnet, dass** das Prozesswasser dem Prozesswasseraufbereitungsschritt aus wenigstens einer Einheit wenigstens einer Stufe einer Altpapieraufbereitungsvorrichtung zugeführt wird und nach dem Prozesswasseraufbereitungsschritt wieder wenigstens einer Einheit wenigstens einer Stufe der Altpapieraufbereitungsvorrichtung zugeführt wird, wobei die Einheit ausgewählt ist aus ein oder mehreren von Stofflöser, Sortiervorrichtung, Entwässerungseinheit und Oxidations-/Reduktionseinheit.

4. Verfahren nach einem der vorhergehenden Ansprüche, **dadurch gekennzeichnet, dass** der pH-Wert des Prozesswassers während des gesamten Prozesswasseraufbereitungsschrittes auf 4,0 bis 8,5 eingestellt wird.

5. Verfahren nach einem der vorhergehenden Ansprüche, **dadurch gekennzeichnet, dass** das Prozesswasser Biozid enthält.

6. Verfahren nach Anspruch 5, **dadurch gekennzeichnet, dass** das Prozesswasser kleiner 1,0 bis 8,0 und bevorzugt 1,0 bis 4,0 kg pro Tonne produziertes Papier Biozid enthält.

7. Verfahren nach Anspruch 5 oder 6, **dadurch gekennzeichnet, dass** das Biozid Glutaraldehyd, 2-Bromo-2-nitropropan-1.3-diol, eine Isothiazolinonverbindung, eine quartäre Ammoniumverbindung, eine Bromverbindung, eine Chlorverbindungen und/oder eine Peroxyverbindung, bevorzugt Ammoniumbromid und/oder stabilisierte Peroxyessigsäure, enthält oder ist.

8. Verfahren nach einem der vorhergehenden Ansprüche, **dadurch gekennzeichnet, dass** dem Prozesswasser vor oder während des Vorversäuerungsschrittes wenigstens ein Polysaccharid spaltendes Enzym, vorzugsweise in einer Menge von 1 bis 100.000 Einheiten, zugegeben wird.

9. Verfahren nach einem der vorhergehenden Ansprüche, **dadurch gekennzeichnet, dass** dem Prozesswasser vor oder während des Vorversäuerungsschrittes wenigstens ein Polysaccharid spaltendes Enzym zugegeben wird, welches aus der Gruppe ausgewählt wird, welche aus Amylasen, Cellulasen, Glucoamylasen, Xylanasen, alpha-Galactosidasen und beliebigen Kombination von zwei oder mehr der vorgenannten Enzyme besteht.

10. Verfahren nach einem der vorhergehenden Ansprüche, **dadurch gekennzeichnet, dass** dem Prozesswasser vor oder während des Vorversäuerungsschrittes wenigstens ein Oligosaccharid spaltendes Enzym, vorzugsweise in einer Menge von 1 bis 1.000 Einheiten, zugegeben wird, welches aus der Gruppe ausgewählt wird, welche aus Lactasen, Maltasen, Invertasen und Kombination hiervon besteht

11. Verfahren nach einem der vorhergehenden Ansprüche, **dadurch gekennzeichnet, dass** dem Prozesswasser vor oder während des Vorversäuerungsschrittes wenigstens ein Polysaccharid spaltendes Enzym und wenigstens eine Lipase zugegeben wird, bevorzugt wenigstens ein Polysaccharid spaltendes Enzym, wenigstens eine Lipase und wenigstens eine Protease zugegeben wird und besonders bevorzugt wenigstens ein Polysaccharid spaltendes Enzym, wenigstens ein Oligosaccharid spaltendes Enzym, wenigstens eine Lipase und wenigstens eine Protease zugegeben wird.

12. Verfahren nach einem der vorhergehenden Ansprüche, **dadurch gekennzeichnet, dass** dem Prozesswasser vor oder während des Vorversäuerungsschrittes wenigstens ein Polysaccharid spaltendes Enzym und bevorzugt wenigstens eine Amylase, aber während des Prozesswasseraufbereitungsschrittes keine Protease zugegeben wird.

13. Verfahren nach einem der vorhergehenden Ansprüche, **dadurch gekennzeichnet, dass** dem Prozesswasser jedes der zuzusetzenden Enzyme an zwei oder mehr verschiedenen Stellen zugegeben wird, wobei dem Prozesswasser ein Teil von jedem der zuzusetzenden Enzyme während der Vorversäuerung durch eine Zufuhrleitung in den Vorversäuerungsreaktor zugegeben wird, wohingegen der andere Teil von jedem der zuzusetzenden Enzyme dem Prozesswasser nach der Vorversäuerung zugegeben wird.

14. Verfahren nach einem der vorhergehenden Ansprüche, **dadurch gekennzeichnet, dass** der Prozesswasseraufbereitungsschritt auch einen Entkalkungsschritt umfasst, bei dem das Prozesswasser einem Druckentspannungsflotationsschritt unterzogen wird.

15. Verfahren nach Anspruch 14, **dadurch gekennzeichnet, dass** die Druckdifferenz zwischen der Druckbeaufschlagung und der Entspannung bei dem Druckentspannungsflotationsschritt wenigstens 2 bar, bevorzugt wenigstens 3 bar, besonders bevorzugt wenigstens 4 bar und höchst bevorzugt wenigstens 5 bar beträgt.

## Claims

1. A method for cleaning process water circulated in a paper recycling system, comprising a process water treatment step which comprises at least one pre-acidification step and at least one anaerobic cleaning step, wherein at least a portion of the process water to be cleaned is subjected to hydrolysis and acidification in the at least one pre-acidification step, and the process water thus treated is subsequently being contacted with anaerobic microorganisms in the at least one anaerobic cleaning step in order to break down impurities contained in the process water, wherein at least one saccharide-cleaving enzyme is being added to the process water before or during the at least one pre-acidification step and the pH value of the process water is being adjusted to 8.0 or less at least during the at least one pre-acidification step and during the at least one anaerobic cleaning step, wherein neither alkaline hydrolysis nor chemical hydrolysis is being carried out during the entire process water treatment.

2. The method according to claim 1, **characterized in that** the pH value of the process water is being set to 8.0 or less at least from the beginning of the at least one pre-acidification step to the end of the at least one anaerobic cleaning step.

3. The method according to claim 1 or 2, **characterized in that** the process water is being fed to the process water treatment stage from at least one unit of at least one stage of a paper recycling system, and is being fed again, after the process water preparation step, to at least one stage of a paper recycling system, wherein the unit is selected from one or more of a pulping unit, a sorting device, a dewatering unit, and an oxidation/reduction unit.

4. The method according to one of the preceding claims, **characterized in that** the pH value of the process water is being adjusted to 4.0 to 8.5 during the entire process water treatment step.

5. The method according to one of the preceding claims, **characterized in that** the process water contains biocide.

6. The method according to claim 5, **characterized in that** the process water contains less than 1.0 to 8.0 and preferably 1.0 to 4.0 kg of biocide per ton of produced paper.

7. The method according to claim 5 or 6, **characterized in that** the biocide contains or is glutaraldehyde, 2-bromo-2-nitropropane-1,3-diol, an isothiazolinone compound, a quaternary ammonium compound, a bromine compound, a chlorine compound and/or a peroxy compound, preferably ammonium bromide and/or stabilized peroxyacetic acid.

8. The method according to one of the preceding claims, **characterized in that** at least one polysaccharide-cleaving enzyme, preferably in an amount of 1 to 100,000 units, is being added to the process water before or during the pre-acidification step.

9. The method according to one of the preceding claims, **characterized in that** at least one polysaccharide-cleaving enzyme selected from the group consisting of amylases, cellulases, glucoamylases, xylanases, alpha-galactosidases, and any combination of two or more of the aforementioned enzymes is being added to the process water before or during the pre-acidification step.

10. The method according to one of the preceding claims, **characterized in that** at least one oligosaccharide-cleaving enzyme, preferably in an amount of 1 to 1,000 units, is being added to the process water before or during the pre-acidification step, which is selected from the group consisting of lactases, maltases, invertases and combinations thereof.

11. The method according to one of the preceding claims, **characterized in that** at least one polysaccharide-cleaving enzyme and at least one lipase is being added to the process water before or during the pre-acidification step, preferably at least one polysaccharide-cleaving enzyme, at least one lipase and at least one protease is added, and particularly preferably at least one polysaccharide-cleaving enzyme, at least one oligosaccharide-cleaving enzyme, at least one lipase and at least one protease is being added.

12. The method according to one of the preceding claims, **characterized in that** at least one polysaccharide-cleaving enzyme and preferably at least one amylase is being added to the process water before or during the pre-acidification step, but no protease is being added during the process water treatment step.

13. The method according to one of the preceding claims, **characterized in that** each of the enzymes to be added is being added to the process water at two or more different locations, wherein a part of each of the enzymes to be added is being added to the process water during the pre-acidification step through a feed line into the pre-acidification reactor, whereas the other part of each of the enzymes to be added is being added to the process water after the pre-acidification step.

14. The method according to one of the preceding claims, **characterized in that** the process water treatment step also comprises a decalcification step in which the process water is being subjected to a pressure release flotation step.

15. The method according to claim 14, **characterized in that** the pressure difference between the pressurization and the depressurization in the pressure release flotation step is at least 2 bar, preferably at least 3 bar, particularly preferably at least 4 bar, and most preferably at least 5 bar.

## Revendications

1. Procédé de purification de l'eau de procédé acheminée dans un circuit dans une installation de traitement des vieux papiers comprenant une étape de traitement de l'eau de procédé, qui comprend au moins une étape de préacidification et au moins une étape de purification anaérobie, dans lequel au moins une partie de l'eau de procédé à purifier est soumise à une hydrolyse et à une acidification dans au moins une étape de préacidification et l'eau de procédé ainsi traitée est ensuite mise en contact avec des micro-organismes anaérobies dans au moins une étape de purification anaérobie afin de décomposer les impuretés contenues dans l'eau de procédé, dans lequel au moins une enzyme de clivage du saccharide est ajoutée à l'eau de procédé avant ou pendant au moins une étape de préacidification et le pH de l'eau de procédé est ajusté à 8,0 ou moins pendant au moins une étape de préacidification et pendant au moins une étape de purification anaérobie, dans lequel aucune hydrolyse alcaline ni aucune hydrolyse chimique n'est effectuée pendant toute la durée du traitement de l'eau de processus.

2. Procédé selon la revendication 1, **caractérisé en ce que** la valeur du pH de l'eau de procédé est ajustée à 8,0 ou moins au moins du début de l'au moins une étape de préacidification jusqu'à la fin de l'au moins une étape de purification anaérobie.

3. Procédé selon la revendication 1 ou 2, **caractérisé en ce que** l'eau de procédé est amenée à l'étape de traitement de l'eau de procédé à partir d'au moins une unité d'au moins une étape d'un dispositif de traitement des vieux papiers et après l'étape de traitement de l'eau de procédé, au moins une unité d'au moins une étape du dispositif de traitement des vieux papiers est à nouveau amenée, l'unité étant choisie parmi un ou plusieurs du pulpeur, du dispositif de tri, de l'unité de drainage et de l'unité d'oxydation/réduction.

4. Procédé selon l'une quelconque des revendications précédentes, **caractérisé en ce que** le pH de l'eau de procédé est ajusté à 4,0 à 8,5 pendant toute l'étape de traitement de l'eau de procédé.

5. Procédé selon l'une quelconque des revendications précédentes, **caractérisé en ce que** l'eau de procédé contient un biocide.

6. Procédé selon la revendication 5, **caractérisé en ce que** l'eau de procédé contient moins de 1,0 à 8,0 et de préférence 1,0 à 4,0 kg de biocide par tonne de papier produit.

7. Procédé selon la revendication 5 ou 6, **caractérisé en ce que** le biocide contient ou est le glutaraldéhyde, le 2-bromo-2-nitropropane-1,3-diol, un composé d'isothiazolinone, un composé d'ammonium quaternaire, un composé de brome, un composé de chlore et/ou un composé peroxy, de préférence le bromure d'ammonium et/ou l'acide peroxyacétique stabilisé.

8. Procédé selon l'une quelconque des revendications précédentes, **caractérisé en ce qu'**au moins une enzyme de clivage de polysaccharide, de préférence en une quantité de 1 à 100 000 unités, est ajoutée à l'eau de procédé avant ou pendant l'étape de préacidification.

9. Procédé selon l'une quelconque des revendications précédentes, **caractérisé en ce qu'**au moins une enzyme de clivage de polysaccharides est ajoutée à l'eau de procédé avant ou pendant l'étape de préacidification, choisie dans le groupe constitué par les amylases, les cellulases, les glucoamylases, les xylanases, les alpha-galactosidases et toute combinaison de deux ou plusieurs enzymes précitées.

10. Procédé selon l'une quelconque des revendications précédentes, **caractérisé en ce que** au moins une enzyme de clivage d'oligosaccharides, de préférence en une quantité de 1 à 1000 unités, est ajoutée à l'eau de procédé avant ou pendant l'étape de préacidification, choisie dans le groupe constitué par les lactases, les maltases, les invertases et leur combinaison.

11. Procédé selon l'une quelconque des revendications précédentes, **caractérisé en ce qu'**au moins une enzyme de clivage de polysaccharide et au moins une lipase sont ajoutées à l'eau de procédé avant ou pendant l'étape de préacidification, de préférence au moins une enzyme de clivage de polysaccharide, au moins une lipase et au moins une protéase sont ajoutées et de manière particulièrement préférée au moins une enzyme de clivage de polysaccharide, au moins une enzyme de clivage d'oligosaccharide, au moins une lipase et au moins une protéase sont ajoutées.

12. Procédé selon l'une quelconque des revendications précédentes, **caractérisé en ce qu'**au moins une enzyme de clivage de polysaccharide et de préférence au moins une amylase est ajoutée à l'eau de procédé avant ou pendant l'étape de préacidification, mais aucune protéase n'est ajoutée pendant l'étape de traitement de l'eau de procédé.

13. Procédé selon l'une quelconque des revendications précédentes, **caractérisé en ce que** l'eau de procédé de chacune des enzymes à ajouter est ajoutée à deux endroits différents ou plus, une partie de chacune des enzymes à ajouter étant ajoutée à l'eau de procédé pendant la préacidification par une conduite d'alimentation dans le réacteur de préacidification, tandis que l'autre partie de chacune des enzymes à ajouter est ajoutée à l'eau de procédé après la préacidification.

14. Procédé selon l'une quelconque des revendications précédentes, **caractérisé en ce que** l'étape de traitement de l'eau de procédé comprend également une étape de détartrage, dans laquelle l'eau de procédé est soumise à une étape de flottation par détente de pression.

15. Procédé selon la revendication 14, **caractérisé en ce que** la différence de pression entre la mise sous pression et la détente lors de l'étape de flottation par détente de pression est d'au moins 2 bars, de préférence d'au moins 3 bars, de manière particulièrement préférée d'au moins 4 bars et de manière très préférée d'au moins 5 bars.
